# EUROPEAN PATENT SPECIFICATION

(11) **EP 3 103 845 B1**
(45) Date of publication and mention of the grant of the patent: **01.08.2018**
(21) Application number: 16178081.2
(22) Date of filing: 01.06.2012
(51) Int. Cl.: C09D 5/00

(54) **FORMALDEHYDE FREE BINDING COMPOSITION FOR MINERAL FIBRES**
FORMALDEHYDFREIE BINDERZUSAMMENSETZUNG FÈR MINERALFASERN
COMPOSITION DE LIANT SANS FORMALDÉHYDE POUR FIBRES MINERALES

(43) Date of publication of application: 14.12.2016
(62) Divisional of application: 12735649.1
(73) Proprietor: STM Technologies S.r.l., 20149 Milano (IT)
(72) Inventor: LA GRECA, Marco, 24040 Calvenzano (Bergamo) (IT); MASSINI, Roberto, 24040 Calvenzano (Bergamo) (IT)
(74) Representative: Zambardino, Umberto

(56) References cited:
- WO-A2-2010/037109
- CA-A1- 2 402 653
- DE-A1-102004 033 561

## Description

The present invention relates in general terms to a formaldehyde-free aqueous binding composition (binder) for mineral fibres, comprising ammonium sulfamate and at least one monosaccharide.

### Background art

Fibrous mineral materials, such as rock wool or glass wool, widely used as both heat and sound insulating materials, for example in civil or industrial construction, are known in the art. Such materials are formed by mineral fibres joined together by means of binding compositions (binders), usually aqueous, which comprise a polymerizing/crosslinking agent, and are thermosetting and capable of tightly joining the fibres by means of high-temperature thermal-mechanical treatments. In this regard, the process for preparing these fibrous mineral materials generally comprises a first step in which so-called "free" (i.e. not joined together) mineral fibres are formed, followed by a step of hot impregnation of said free fibres with binding compositions which, as a result of contact and the high temperatures, polymerize, thus tightly joining the fibres together and forming the final fibrous material.

Various aqueous binding compositions that may be used for this purpose are known in the art; these contain compounds able to polymerize through a Maillard reaction (for a generic reference on the Maillard reaction see, for example, GP Ellis et al., Advances in Carbohydrate Chem, 1959, pgs. 63-134), such as sugars and proteins, or poly- or monocarboxylic acids and a source of ammonia, and further comprise different types of polymeric/crosslinking agents.

WO2000996532 discloses a binding composition for fibres of varying nature, comprising a monosaccharide and an ammonium salt of a monocarboxylic acid, characterized in that it is free of formaldehyde.

US5300562 discloses a binding composition (binder), useful for preparing glass fibrous material, which comprises a phenolic resin in the presence of formaldehyde and urea. However, the use of said phenolic resin has a disadvantage, which is the possible release, from the final fibrous material, of formaldehyde, which is known to be a highly toxic substance and harmful to health. An alternative to phenolic resins is represented by so-called acrylic resins, which comprise an acrylic-based polymeric component in the place of the phenolic component and are substantially free of formaldehyde. However, said compositions have high production costs and are disadvantageous from an industrial viewpoint.

US8114210 discloses an aqueous solution useful as a binder for fibrous material, which comprises a reducing sugar, an inorganic ammonium salt (ammonium sulphate) as a polymerizing/crosslinking agent, and, optionally, a carboxylic acid.

WO 2010/037109 discloses a process for removing CO₂ from a CO₂-containing gas, the process comprising contacting an aqueous liquid with a CO₂-containing gas to promote diffusion of the CO₂ into the aqueous liquid; and contacting the CO₂ in the aqueous liquid with immobilized carbonic anhydrase entrapped in a polymeric immobilization material to catalyze hydration of the CO₂ and form a treated liquid containing hydrogen ions and bicarbonate ions; wherein the polymeric immobilization material either (i) stabilizes the carbonic anhydrase or (ii) comprises a micellar or inverted micellar material.

DE 102004033561 discloses a binder produced by reacting a water-based carbohydrate material with an additive comprising phosphoric acid, sulfuric acid, a sulfuric acid derivative or a salt thereof. The binder is useful for making carbon active briquettes.

CA 22402653 discloses a coating composition comprising i. a surface coating material, ii. at least a first enzyme, and iii. at least one flame retarding compound, iv. at least one antimicrobial compound wherein the first enzyme is capable of directly or indirectly inhibiting attachment and/or growth of microorganisms after applying the coating composition to a surface and allowing it to form a film.

The applicants have now surprisingly found a formaldehyde-free aqueous binding composition (binder), which is useful for the preparation of fibrous mineral material and comprises, as the polymerizing/crosslinking agent, an organic salt selected from: ammonium sulfamate or an alkali or alkaline earth metal sulfamate, which makes it possible to solve the problems of the prior art and assures further advantages as described below in detail.

### Summary of the invention

In a first aspect, the present invention regards a formaldehyde-free aqueous binding composition (binder) comprising:
at least one monosaccharide,
ammonium sulfamate or an alkali or alkaline earth metal sulfamate, in a percentage by weight comprised between 1% and 10%
ammonium hydroxide (NH₄OH), and/or an organic or inorganic ammonium salt.

In a further aspect, the invention relates to the use of said aqueous binding composition in the preparation of a fibrous mineral material, such as, for example, glass wool and rock wool.

In an additional aspect, the invention relates to a fibrous mineral material obtained by means of a process which comprises the polymerization of the aqueous binding composition of the invention.

### Detailed description

"Aqueous binding composition" means an aqueous solution obtained by dissolving the components of said composition in water, as a potential binding agent (binder) for fibrous material.

Unless otherwise specified, "percentage by weight" of a component means the percentage of said component relative to the total weight of the components of the composition, considered dry, i.e. in the absence of water (dry composition).

The composition of the invention can be advantageously used in the preparation of fibrous material, such as, for example, glass wool or rock wool. Said fibrous material, typically for use as a heat and/or sound insulating material, can be prepared using known techniques which provide for the initial formation of free glass or rock fibres, followed by impregnation of said fibres with a binding composition (binder), and subsequent hot polymerization of the latter in order to firmly bind the mineral fibres together.

Therefore, in a first aspect, the present invention relates to an aqueous binding composition (binder) characterized in that it contains ammonium sulfamate or alkali or alkaline earth metal sulfamate in addition to at least one monosaccharide and an ammonia source such as ammonium hydroxide (or ammonium hydrate, having the formula NH₄OH) and/or an organic or inorganic ammonium salt.

In this regard, examples of organic ammonium salts which may be used are salts of mono- or dicarboxylic organic acids, preferably selected from: citric acid, tartaric acid, glycolic acid, malic acid and lactic acid. Inorganic ammonium salts which may be used are preferably selected from: ammonium nitrate, ammonium phosphate and ammonium sulphate.

In one embodiment, the present composition comprises ammonium hydroxide and/or an organic or inorganic ammonium salt in a percentage by weight of at least 2%, preferably comprised between 2 and 10% by weight, even more preferably comprised between 2 and 5%.

The presence of the ammonium hydroxide and/or an organic or inorganic ammonium salt as mentioned above, besides providing an ammonia source, is also useful for adjusting the pH of the composition of the invention to values comprised between 5 and 9, preferably between 6 and 8. At this pH, in fact, a greater rate of polymerization of the present composition during the preparation of the fibrous mineral material has been observed.

As noted above, the present composition comprises at least one monosaccharide, preferably in a percentage by weight comprised between 80% and 95%, preferably comprised between 80% and 90%. Said monosaccharide can be advantageously selected from the monosaccharides known in the art, both ketose and aldose, triose, pentose and/or hexose, having either an L or D anomeric configuration, or mixtures thereof. Therefore, examples of monosaccharides that can be used are: fructose, glucose, galactose, xylose, arabinose, ribose, lixose, mannose, ramnose and the like. Said monosaccharides can be purchased and utilized as such, or they can be obtained using known methods, for example by chemical reduction of disaccharides or polysaccharides in general, such as, *inter alia,* sucrose, maltose and the like.

In a preferred embodiment, said monosaccharide is selected from: fructose and glucose, and even more preferably present in percentage by weight comprised between 80% and 90%.

Preferably, the present composition contains at least two monosaccharides, of which at least one is preferably glucose. In a preferred embodiment, the present composition comprises at least one aldose monosaccharide, such as, for example, glucose, and at least one ketose monosaccharide, such as fructose.

In particular, the presence of at least glucose makes it possible to obtain improved binding properties of the composition and stability of the fibrous material.

When present, the two monosaccharides can be used in an amount such that their sum is comprised between 80% and 95% of the weight of the composition. Preferably, the two monosaccharides are present in a ratio to each other of about 1:1 by weight, or else one of the two monosaccharides is present in slight excess, for example in a ratio comprised from 1:1.5 to 1:3. In one embodiment, the present composition contains fructose and glucose in a ratio of 1:1.25 and in an overall amount comprised between 80% and 90% by weight, relative to the total weight of the components considered dry, i.e. in the absence of water.

As regards the ammonium sulfamate, or alkali or alkaline earth metal sulfamate, it acts as a polymerizing/crosslinking agent, and in particular contributes to the formation of melanoidin derivatives, generally by polymerization through a Maillard reaction, with the monosaccharide, during the preparation of the fibrous material. In particular, the Maillard reaction leads to the formation of high molecular weight aromatic molecules, or mixtures of aromatic polymers and/or polymers containing nitrogen (melanoidins), which enable the composition to take on binding and thermosetting characteristics, necessary for acting effectively as a binder for mineral fibres. In particular, said melanoidins can have a carbon:nitrogen ratio and a degree of unsaturation and aromaticity which can vary considerably depending on temperature (for a general reference see Ames et al. The Maillard Browning Reaction, Chemistry and Industry, 1988, 7, 558-561).

Examples of sulfamates that can be used are selected from: sodium, potassium, calcium, and ammonium sulfamate, ammonium sulfamate (CAS No:7773-06-0) being preferred. In particular, the ammonium sulfamate, having the general formula H₂NSO₃⁻NH₄⁺, is an organic (non-carboxylic) salt, easy to handle as it exhibits low toxicity and is not irritating upon contact with skin. It can be prepared, for example, by hydrolysis of the reaction product obtained by treating urea with fuming sulphuric acid or can be purchased on the market. In the invention, the present aqueous composition comprises ammonium sulfamate and/or alkali or alkaline earth metal sulfamate in a percentage by weight comprised between 1 and 10%, preferably comprised between 1 and 5%.

Advantageously, its use as a component of the composition of the present invention results in polymerization times - during the preparation of fibrous mineral material - which are much shorter than the times required using binding compositions of the prior art. In fact, as described in the experimental part herein included, the present composition makes it possible to obtain a rate of polymerization, determined by measuring the gel time (for a definition of gel time see for example US8114210), which is distinctly higher (by over 20%) compared to corresponding binding compositions containing, for example, ammonium sulphate instead of ammonium sulfamate as the polymerizing/crosslinking agent.

High rates of polymerization lead to shorter preparation times for the fibrous material, and moreover allow the temperature during the polymerization step to be reduced to temperatures even below 200° C, thus ensuring more advantageous experimental conditions, which can be more easily applied at an industrial level. Furthermore, the sulfamate, preferably of ammonium, is used as a polymerizing/crosslinking agent in the composition of the invention in smaller amounts (equivalent to even one third) compared to other crosslinking agents, such as, for example, ammonium sulphate, while yet ensuring high yields and excellent properties of mechanical strength of the mineral fibre thus obtained.

Therefore, in a preferred embodiment, the present invention relates to a formaldehyde-free aqueous binding composition (binder) comprising the following amounts of components, expressed in percentages by weight relative to the dry composition:
at least one monosaccharide 80-95%
ammonium sulfamate or an alkali or alkaline earth metal sulfamate 1-10%,
ammonium hydroxide (NH₄OH), and/or an organic or inorganic ammonium salt 2-10%.

In a particularly preferred embodiment, the present invention relates to a formaldehyde-free aqueous binding composition (binder) comprising:
at least one monosaccharide,
ammonium sulfamate, and
ammonium hydroxide (NH₄OH),
preferably present in the following percentage amounts by weight:

| | |
|---|---|
| at least one monosaccharide | 80-95%, |
| ammonium sulfamate | 1-10%, and |
| ammonium hydroxide (NH₄OH) | 2-10%. |

In a further preferred embodiment, the composition of the invention comprises:

| | |
|---|---|
| glucose | 45-50%, |
| fructose | 35-45%, |
| ammonium sulfamate | 1-10%, and |
| ammonium hydroxide | 2-10%. |

In a particularly preferred embodiment, the composition of the invention can contain further additional components, used, for example, to improve its temperature resistance or to further promote the process of polymerization of the composition during the formation of the fibrous mineral material. In particular, said optional additional components, present individually or together in a mixture, are selected from the group consisting in: urea, preferably in an amount comprised between the 5 and 10% by weight with respect to the amount of monosaccharide present in the composition, ammonium lignosulfonate (CAS No. 8061-53-8), preferably in a amount of less than 15% by weight, an acrylic component as described below in detail, mineral oils, generally present as an emulsion in a amount comprised between 5% and 8% by weight, amino silanes, preferably in a amount comprised between 0.1% and 0.5% by weight, polysiloxanes, preferably in a amount comprised between 0.1% and 0.5% by weight, and the like. Said optional additional components can be present either individually or together in mixture. In particular, in one embodiment of the invention, the acrylic component, present as an additional component as described above, is preferably in the form of an emulsion, and can be selected from: acrylic resin, preferably having an acidic pH (generally comprised between 2 and 4), and a carboxylic polymer in a mixture with a polyol. In this regard, acrylic resins that can be used are heat-resistant aqueous resins, selected, for example, from Acquaset 600™ (Rohm & Hass) and Acrodur® (BASF).

The preferred carboxylic polymers are obtained from acrylic or methacrylic acid.

The polyol is selected, for example, from: polyethers, polypropylene glycol, polyesters and the like. Preferably, the molecular weight of said acrylic component is comprised between 3000 and 10000, preferably between 5000 and 8000 Dalton.

When present, said acrylic component can be used in an amount of up to 20% by weight, preferably up to 15% by weight, even more preferably, up to 10% of the total weight of the dry composition, i.e. the composition devoid of water. This addition advantageously enables the binding strength of the composition to be increased, with a consequent improvement in the mechanical and elastic properties of the glass or rock fibrous material comprising the present composition, for example as regards the elastic return after compression of fibreglass felts generally used as heat and sound insulators. Therefore, in a preferred embodiment, the present invention relates to a formaldehyde-free aqueous binding composition (binder) comprising:
at least one monosaccharide,
ammonium sulfamate,
ammonium hydroxide, and
at least one acrylic component having a molecular weight comprised between 3000 and 10000 Da, preferably selected from a thermosetting aqueous acrylic, and a polycarboxylic acid in a mixture with a polyol, preferably present in the following percentages by weight:

| | |
|---|---|
| at least one monosaccharide | 80-95%, |
| ammonium sulfamate | 1-10%, |
| ammonium hydroxide | 2-10%, and |
| at least one acrylic component | 0-15%. |

In a further preferred embodiment, the composition of the invention comprises:

| | |
|---|---|
| glucose | 45-50%, |
| fructose | 35-45%, |
| ammonium sulfamate | 1-10%, |
| ammonium hydroxide | 2-10%, |
| at least one acrylic component | 0-15%. |

Advantageously, the aqueous binding composition (binder) of the present invention, is also characterized in that it is stable over time (even for days) and it is not observed the formation, for example, of moulds or products of decomposition, which can often be present in the case of storage of the aqueous binding compositions known in the art, and containing other polymerizing/crosslinking agents such as, for example, ammonium sulphate.

Furthermore, the composition of the invention can be easily prepared using water as the solvent and by means of a process that can be easily applied also on an industrial scale. In fact, the present composition, prepared without the use of potential sources of formaldehyde, can be obtained in a short frame of time, simply by mixing the various components described above with water.

Generally speaking, water is used *quantum sufficit* to dissolve the components of the composition and/or obtain aqueous solutions with defined concentrations.

In other words, the present invention relates to a formaldehyde-free aqueous solution useful in the preparation of fibrous mineral material, obtained by dissolving:
at least one monosaccharide,
ammonium sulfamate or alkali or alkaline earth metal sulfamate, and
ammonium hydroxide and/or an organic or inorganic ammonium salt,
and optional additional components,in water,
in the percentages by weight according to each of the embodiments described above.

In this regard, in a preferred embodiment the invention relates to a formaldehyde-free binding composition (binder) in the form of an aqueous solution having a concentration by weight comprised between 10 and 30%, more preferably comprised between 10 and 20%, even more preferably comprised between 10% and 15%, intended as the weight of all the components relative to the total weight of the solution.

The present aqueous binding composition (binder) can be prepared by mixing the desired amounts of the individual components at room temperature (i.e. at a temperature comprised between about 15° C and about 40° C), generally in a mixing tank, and then simply adding water, *quantum sufficit* to obtain the preferred concentrations.

All the components of the binding composition of the invention are readily available and purchasable on the market.

In a further aspect, the invention relates to the use of the present composition in the preparation of glass or rock mineral fibres. The invention additionally relates to the use of ammonium sulfamate as a crosslinking and polymerizing agent in formaldehyde-free aqueous binding compositions for mineral fibres.

In this direction, the present invention relates to a fibrous material comprising mineral fibres, preferably glass or rock, joined together by using the present aqueous binding composition (binder). Therefore, the subject matter of the invention further relates to a fibrous material obtained from free mineral fibres by means of a process which comprises at least one step of polymerizing the binding composition of the invention at a temperature of at least 180° C.

In this regard, said fibrous mineral material can be conveniently prepared by means of a process which comprises the steps of:
a. forming free fibres, preferably by melting glass (such as, for example, mixtures of alkaline borosilicates) or rock (such as, for example, mixtures of basalt, dolomite, slag and limestone);
b. placing said free fibres in contact with the binding composition of the present invention so as to form agglomerates of mineral fibres with the binding composition of the invention, preferably by spraying said composition on the free fibres; and
c. subjecting said agglomerates to a heat treatment at a temperature of at least 180° C.

The heat treatment preferably takes place at a temperature comprised between 180° C and 250° C, more preferably comprised between 180° C and 200° C, typically in polymerization ovens, and triggers the process of polymerization of the binding composition of the invention, which binds stably to the fibres, thus forming the final fibrous material, ready for use. Said heat treatment can be carried out using hot air made to circulate in the oven by means of variable pressure fans, for a time that will vary according to the oven speed, for example depending on the weight per surface unit of the finished product.

If necessary, the polymerization step c. is preceded by a step of orienting (or "crimping") the fibres, which enables the fibres to be oriented in a vertical position, thus increasing their resistance to compression.

The impregnation step b. is preferably carried out by spraying the aqueous composition of the invention on the free fibres that have just been hot formed, using apparatus known in the art and commonly used in the preparation of fibrous mineral material. At the end of the impregnation step b. the agglomerates of mineral fibres with the composition of the invention are thus obtained, typically having a parallelepiped cross section and called "mats".

Analogously, step a. of forming the free fibres (commonly referred to as "fibreising process"), can be conveniently carried out by means of operations known to the person skilled in the art and which comprise melting the initial glass or rock material, and then passing it through an extrusion die connected to a rotor provided with thousands of holes which, by turning at high speed, output extremely fine (glass) fibre filaments, ready to be placed in contact with the binding composition according to the subsequent step b. described above. In the case of rock fibre, the rock in the form of a high-temperature lava is fed to wheels which, by turning at high speed, deliver the centrifugal force necessary for thinning into fibres, which are likewise ready to be placed immediately into contact with the aqueous binder.

Once cut into the required dimensions, the fibrous material can be packaged and used as heat and/or sound insulation, and will moreover show excellent properties in terms of mechanical strength, heat resistance and elastic return, intended as the difference between the nominal thickness of the material before and after it is packed. Therefore, in an additional aspect, the invention relates to a fibrous mineral material obtained by the process as described above.

The present invention will now be described by means of examples that are not intended, however, to limit the scope thereof.

### Experimental part

### Example 1: rate of polymerization of the composition of the present invention as a binder in the preparation of fibrous material.

The rate of polymerization of the following compositions of the invention was determined by measuring the so-called "gel time". The gel time is a known experimental variable which is used by the person skilled in the art and enables the measurement of the rate of polymerization of aqueous binding compositions. Said technique consists, in particular, in pouring a certain amount of an aqueous binding composition on a thermostatically controlled hot surface (generally a plate) and measuring the time necessary to form the first filament of said composition.

In the present example, the gel time of the composition of the invention was measured by pouring a weigthed amount (in the order of millilitres) of aqueous binding composition on a hot plate at a temperature of about 150° C, and measuring the time it takes to form the first filament, using a spatula.

The gel time is practically calculated as the time elapsing between the addition of the aqueous composition on the plate, and the moment at which it was possible to form the first filament of the polymerized fibre using the spatula.

The data collected are shown in Table 1.

**Table 1: gel time values of some compositions of the present invention comprising ammonium sulfamate (3%) as a polymerizing and crosslinking agent.**

| Composition | Amount deposited and plate temperature | Polymerization time (gel time) |
|---|---|---|
| **A** | 2 ml (150° C) | 25 sec. |
| **B** | 2 ml (150°C) | 25 sec. |
| **C** | 2 ml (150°C) | 22 sec. |

### Composition A

| | |
|---|---|
| 14% aqueous solution (pH 7.5) of: | |
| glucose | 95% |
| ammonium sulfamate | 3%, |
| ammonium hydroxide | 2% |

### Composition B

| | |
|---|---|
| 14% aqueous solution (pH 7.5) of: | |
| glucose | 50.5% |
| fructose | 44.5% |
| ammonium sulfamate | 3%, |
| ammonium hydroxide | 2% |

### Composition C

| | |
|---|---|
| 14% aqueous solution (pH 6.5) of: | |
| glucose | 85% |
| ammonium sulfamate | 3% |
| ammonium hydroxide | 2% |
| acrylic component Acquaset 600 (DOW) | 10% |

### Example 2 (comparative).

The experiments for calculating the gel time as in example 1 were carried out using ammonium sulphate as the polymerizing/crosslinking agent. The results are summed up in table 2.

**Table 2: gel time values of the compositions of Example 1, in which the ammonium sulfamate (3%) was replaced by ammonium sulphate (3%).**

| Composition | Amount deposited and plate temperature | Polymerization time (gel time) |
|---|---|---|
| A1 | 2 ml (150° C) | 34 sec. |
| B1 | 2 ml (150°C) | 35 sec. |
| C1 | 2 ml (150°C) | 30 sec. |

| | | |
|---|---|---|
| A1-C1: compositions corresponding to compositions A-C of Example 1, in which the ammonium sulfamate (3%) was replaced with ammonium sulphate (3%). | | |

As can be easily deduced from Tables 1 and 2 above, the present composition makes it possible to obtain - the amount of polymerizing/crosslinking agent used being equal - decidedly higher rates of polymerization, which results in a polymerization time that is up to 25% shorter than when ammonium sulphate is used. This means shorter times for the preparation of fibrous material using the present binding composition, as compared to using known compositions commonly used in the art.

## Claims

1. A formaldehyde-free aqueous binding composition comprising:
at least one monosaccharide,
ammonium sulfamate or alkali or alkaline earth metal sulfamate, in a percentage by weight comprised between 1% and 10%.
ammonium hydroxide, and/or an organic or inorganic ammonium salt.

2. The binding composition according to claim 1, wherein said at least one monosaccharide is present in a percentage by weight comprised between 80% and 95%, preferably between 80% and 90%.

3. The binding composition according to claim 1 or 2, wherein said monosaccharide is selected from among: glucose, fructose, galactose, xylose, arabinose, ribose, lixose, mannose and ramnose, preferably between glucose and fructose.

4. The binding composition according to any one of the preceding claims, wherein said ammonium hydroxide and/or an organic or inorganic ammonium salt is present in a percentage by weight of at least 2%, preferably comprised between 2 and 10% by weight.

5. The binding composition according to any one of the preceding claims, wherein said organic ammonium salt is the salt of an acid selected from among: citric acid, tartaric acid, glycolic acid, malic acid and lactic acid.

6. The binding composition according to any of the preceding claims, comprising ammonium sulfamate in a percentage by weight comprised between 1% and 5%.

7. The binding composition according to any one of the preceding claims, wherein said alkali or alkaline earth metal sulfamate is selected among: sodium, potassium and calcium sulfamate.

8. The binding composition according to any one of the preceding claims, further comprising at least one additional ingredient selected from among: urea, ammonium lignosulfonate (CAS No. 8061-53-8), an acrylic component having a molecular weight comprised between 3000 and 10000, a mineral oil, amino silanes, polysiloxanes and mixtures thereof.

9. The binding composition according to claim 8, wherein said acrylic component is selected between: a thermosetting aqueous acrylic resin and a polycarboxylic acid in a mixture with a polyol.

10. The binding composition according to any of claims 8 to 9, wherein said additional ingredient is comprised between 0 and 15%, and preferably up to 10% of the total weight of the dry composition.

11. The binding composition according to any of claims 1 to 10, comprising:
| | |
|---|---|
| glucose | 45-50%, |
| fructose | 35-45%, |
| ammonium sulfamate | 1-10%, |
| ammonium hydroxide | 2-10%, and |
| at least one acrylic component | 0-15%. |

12. A use of the aqueous binding composition in accordance with anyone of the preceding claims, in the preparation of fibrous mineral material.

13. A process for preparing a fibrous material from free mineral fibres, said process comprising at least one step of polymerizing the binding composition of claims 1-11, at a temperature of at least 180° C.

14. The process for preparing a fibrous mineral material according to claim 13, which comprises the steps of:
a. forming free fibres from a glass or rock material;
b. placing said free fibres in contact with the aqueous binding composition according to claims 1-11, so as to form agglomerates of mineral fibres with the binding composition according to claims 1-11; and
c. subjecting said agglomerates to a heat treatment at a temperature of at least 180° C.

15. A fibrous mineral material obtained by the process according to claims 13 and 14.

16. The use of ammonium sulfamate as a crosslinking and polymerizing agent in formaldehyde-free aqueous binding compositions for mineral fibres.

## Patentansprüche

1. Formaldehydfreie wässrige Bindemittelzusammensetzung umfassend:
mindestens ein Monosaccharid,
Ammoniumsulfamat oder Alkali- oder Erdalkalimetallsulfamat, in einem Gewichtsprozentsatz zwischen 1 % und 10 %,
Ammoniumhydroxid, und/oder ein organisches oder anorganisches Ammoniumsalz.

2. Bindemittelzusammensetzung nach Anspruch 1, wobei das mindestens eine Monosaccharid in einem Gewichtsprozentsatz zwischen 80 % und 95 %, bevorzugt zwischen 80 % und 90 %, vorliegt.

3. Bindemittelzusammensetzung nach Anspruch 1 oder 2, wobei das Monosaccharid ausgewählt ist aus: Glukose, Fruktose, Galaktose, Xylose, Arabinose, Ribose, Lyxose, Mannose und Rhamnose, bevorzugt zwischen Glukose und Fruktose.

4. Bindemittelzusammensetzung nach einem der vorangegangenen Ansprüche, wobei das Ammoniumhydroxid und/oder ein organisches oder anorganisches Ammoniumsalz in einem Gewichtsprozentsatz von mindestens 2 %, bevorzugt zwischen 2 und 10 Gewichts-%, vorliegt.

5. Bindemittelzusammensetzung nach einem der vorangegangenen Ansprüche, wobei das organische Ammoniumsalz das Salz einer Säure ist ausgewählt aus: Zitronensäure, Weinsäure, Glykolsäure, Apfelsäure und Milchsäure.

6. Bindemittelzusammensetzung nach einem der vorangegangenen Ansprüche, umfassend Ammoniumsulfamat in einem Gewichtsprozentsatz zwischen 1 % und 5 %.

7. Bindemittelzusammensetzung nach einem der vorangegangenen Ansprüche, wobei das Alkali- oder Erdalkalimetallsulfamat ausgewählt ist aus: Natrium-, Kalium- und Calciumsulfamat.

8. Bindemittelzusammensetzung nach einem der vorangegangenen Ansprüche, weiter umfassend mindestens einen zusätzlichen Bestandteil ausgewählt aus: Urea, Ammoniumlignosulfonat (CAS No. 8061-53-8), einem Acrylbestandteil, welcher ein Molekulargewicht zwischen 3000 und 10000 aufweist, ein Mineralöl, Aminosilane, Polysiloxane und Gemische davon.

9. Bindemittelzusammensetzung nach Anspruch 8, wobei der Acrylbestandteil ausgewählt ist zwischen: einem wärmehärtenden wässrigen Acrylharz und einer Polycarboxylsäure in einem Gemisch mit einem Polyol.

10. Bindemittelzusammensetzung nach einem der Ansprüche 8 bis 9, wobei der zusätzliche Bestandteil zwischen 0 und 15 %, und bevorzugt bis zu 10 %, des gesamten Gewichts der trockenen Zusammensetzung ist.

11. Bindemittelzusammensetzung nach einem der Ansprüche 1 bis 10, umfassend:
| | |
|---|---|
| Glukose | 45 - 50 %, |
| Fruktose | 35 - 45 %, |
| Ammoniumsulfamat | 1 - 10 %, |
| Ammoniumhydroxid | 2 - 10 %, und |
| mindestens einen Acrylbestandteil | 0 - 15 % |

12. Verwendung der wässrigen Bindemittelzusammensetzung gemäß jedem der vorangegangenen Ansprüche, in der Vorbereitung eines faserigen Mineralmaterials.

13. Verfahren zum Vorbereiten eines faserigen Materials aus freien Mineralfasern, wobei das Verfahren mindestens einen Schritt des Polymerisierens der Bindemittelzusammensetzung der Ansprüche 1 - 11 bei einer Temperatur von mindestens 180° C umfasst.

14. Verfahren zum Vorbereiten eines faserigen Mineralmaterials nach Anspruch 13, welches folgende Schritte umfasst:
a. Bilden freier Fasern aus einem Glas- oder Steinmaterial;
b. Inkontaktbringen der freien Fasern mit der wässrigen Bindemittelzusammensetzung nach den Ansprüchen 1 - 11, um Agglomerate der Mineralfasern mit der Bindemittelzusammensetzung nach den Ansprüchen 1 - 11 zu bilden; und
c. Unterziehen der Agglomerate einer Wärmebehandlung bei einer Temperatur von mindestens 180 °C.

15. Faseriges Mineralmaterial, welches durch das Verfahren nach den Ansprüchen 13 und 14 erhalten wurde.

16. Verwendung von Ammoniumsulfamat als ein Vernetzungs- und Polymerisierungsmittel in formaldehydfreien wässrigen Bindemittelzusammensetzungen für Mineralfasern.

## Revendications

1. Composition liante aqueuse exempte de formaldéhyde comprenant :
au moins un monosaccharide,
du sulfamate d'ammonium ou du sulfamate de métal alcalin ou alcalino-terreux, dans un pourcentage en poids compris entre 1 % et 10 %,
de l'hydroxyde d'ammonium et/ou un sel d'ammonium organique ou minéral.

2. Composition liante selon la revendication 1, dans laquelle ledit au moins un monosaccharide est présent dans un pourcentage en poids compris entre 80 % et 95 %, de préférence entre 80 % et 90 %.

3. Composition liante selon la revendication 1 ou 2, dans laquelle ledit monosaccharide est choisi parmi : le glucose, le fructose, le galactose, le xylose, l'arabinose, le ribose, le lixose, le mannose et le ramnose, de préférence entre le glucose et le fructose.

4. Composition liante selon l'une quelconque des revendications précédentes, dans laquelle ledit hydroxyde d'ammonium et/ou un sel d'ammonium organique ou minéral sont présents dans un pourcentage en poids d'au moins 2 %, de préférence compris entre 2 et 10 % en poids.

5. Composition liante selon l'une quelconque des revendications précédentes, dans laquelle ledit sel d'ammonium organique est le sel d'un acide choisi parmi : l'acide citrique, l'acide tartrique, l'acide glycolique, l'acide malique et l'acide lactique.

6. Composition liante selon l'une quelconque des revendications précédentes, comprenant du sulfamate d'ammonium dans un pourcentage en poids compris entre 1 % et 5 %.

7. Composition liante selon l'une quelconque des revendications précédentes, dans laquelle le sulfamate de métal alcalin ou alcalino-terreux est choisi parmi : le sulfamate de sodium, de potassium et de calcium.

8. Composition liante selon l'une quelconque des revendications précédentes, comprenant en outre au moins un ingrédient supplémentaire choisi parmi : l'urée, le lignosulfonate d'ammonium (CAS n° 8061-53-8), un composant acrylique ayant un poids moléculaire compris entre 3 000 et 10 000, une huile minérale, des aminosilanes, des polysiloxanes et leurs mélanges.

9. Composition liante selon la revendication 8, dans laquelle ledit composant acrylique est choisi parmi : une résine acrylique aqueuse thermodurcissable et un acide polycarboxylique dans un mélange avec un polyol.

10. Composition liante selon l'une quelconque des revendications 8 à 9, dans laquelle ledit ingrédient supplémentaire est compris entre 0 et 15 %, et de préférence jusqu'à 10 %, du poids total de la composition sèche.

11. Composition liante selon l'une quelconque des revendications 1 à 10, comprenant :
| | |
|---|---|
| du glucose | 45-50 %, |
| du fructose | 35-45 %, |
| du sulfamate d'ammonium | 1-10%, |
| de l'hydroxyde d'ammonium | 2-10%, et |
| au moins un composant acrylique | 0-15%. |

12. Utilisation de la composition liante aqueuse selon l'une quelconque des revendications précédentes, dans la préparation d'un matériau minéral fibreux.

13. Procédé de préparation d'un matériau fibreux à partir de fibres minérales libres, ledit procédé comprenant au moins une étape de polymérisation de la composition liante des revendications 1-11, à une température d'au moins 180°C.

14. Procédé de préparation d'un matériau minéral fibreux selon la revendication 13, qui comprend les étapes consistant :
a. à former des fibres libres à partir d'un matériau vitreux ou rocheux ;
b. à mettre en contact lesdites fibres libres avec la composition liante aqueuse selon les revendications 1-11, de manière à former des agglomérats de fibres minérales avec la composition liante selon les revendications 1-11 ; et
c. à soumettre lesdits agglomérats à un traitement thermique à une température d'au moins 180°C.

15. Matériau minéral fibreux obtenu par le procédé selon les revendications 13 et 14.

16. Utilisation de sulfamate d'ammonium comme agent de réticulation et de polymérisation dans des compositions liantes aqueuses exemptes de formaldéhyde pour des fibres minérales.
